# EUROPEAN PATENT SPECIFICATION

(11) **EP 2 377 896 B1**
(45) Date of publication and mention of the grant of the patent: **23.04.2014**
(21) Application number: 09833592.0
(22) Date of filing: 07.12.2009
(51) Int. Cl.: C08J 3/12, C08L 33/06

(54) **MARBLE CHIPS FOR AN ARTIFICIAL MARBLE, MANUFACTURING METHOD THEREOF, AND ARTIFICIAL MARBLE COMPRISING SAME**
MARMORSTÜCKE FÜR KUNSTMARMOR, HERSTELLUNGSVERFAHREN DAFÜR UND KUNSTMARMOR DAMIT
ÉCAILLES DE MARBRE POUR MARBRE ARTIFICIEL, PROCÉDÉ DE FABRICATION ASSOCIÉ, ET MARBRE ARTIFICIEL COMPRENANT CES ÉCAILLES

(30) Priority: 15.12.2008 KR 20080127515
(43) Date of publication of application: 19.10.2011
(73) Proprietor: Cheil Industries Inc., Gumi Gyeongsangbuk-do 730-710 (KR)
(72) Inventor: SON, Chang Ho, Yeosu-si Jeollanam-do 555-803 (KR)
(74) Representative: Michalski Hüttermann & Partner Patentanwälte
(86) International application number: PCT/KR2009/007275
(87) International publication number: WO 2010/071314

(56) References cited:
- EP-A2- 2 138 324
- JP-A- 7 033 839
- JP-A- 9 227 189
- KR-A- 20040 059 913
- KR-A- 20070 001 308
- KR-B1- 100 728 589
- US-A- 4 197 225

## Description

### Field of the Invention

The present invention relates to marble chips for an artificial marble, manufacturing method thereof, and artificial marble comprising same. More particularly, the present invention relates to marble chips that have excellent coherence with a matrix, same or similar specific gravity with the matrix, and same or similar abrasion property with the matrix, by applying binders comprising halogenated alkoxylated diacrylate oligomers into the marble chips representing the pattern of artificial marble, and that have high specific gravity, high refractive index and high transparency, and an artificial marble comprising the same.

### Background of the Invention

Generally, an artificial marble is classified into two groups according to the base resin material, where one group represents acrylic artificial marble, and the other group represents unsaturated polyester artificial marble. In particular, there is an increased need for the acrylic artificial marble on various tops and interior materials due to properties such as excellent appearance, soft touch, excellent weather resistance, and the like.

Generally, the acrylic artificial marble is prepared by mixing a mixed syrup of monomer such methyl methacrylate and polymethyl methacrylate, inorganic filler, marble chips representing color and pattern, dissolving polymerization initiator therein, and casting the mixture at the appropriate temperature.

In order to express various colors and patterns of the artificial marble, various kinds of marble chips are added. Specifically, the appearance of artificial marble represented by the marble chips largely effects on the value of goods due to the application of artificial marble.

The marble chips may be obtained by pulverizing an article of artificial marble to form chips of various sizes. As the material for the marble chips, an acrylic resin, the same material as a matrix of the artificial marble, may be used.

Recently, transparent marble chips have been used to provide an otherwise-dull artificial marble with a lucid and elegant impression, e.g. a jewel-like appearance, and there is an increased need for transparent marble chips.

Transparent marble chips have been prepared from polymethylmethacrylate based resin or unsaturated polyester resin up to now. However, such transparent marble chips may have a specific gravity of 1.15~1.24, which may be lower than that of the resin matrix used for the artificial marble. As a result, the transparent marble chips may float to the upper surface of the resin matrix before or during the curing process. This may result in little or no transparent marble chips at an opposite (lower) surface of the artificial stone, and the artificial marble may not exhibit uniform dispersion of the transparent marble chips. In order to compensate for this effect and distribute the transparent marble chips through to the opposite surface of the artificial marble, more than twice amount of transparent marble chips should be added, which may make it difficult to control the thickness of the artificial marble.

In order to increase the specific gravity of the marble chips to the level of the matrix, inorganic fillers such as aluminum trihydrate, barium sulfate, silica, and the like may be added. However, in this case, the transparency of the marble chips would be highly deteriorated.

Meanwhile, artificial marbles in the form of engineered stones, which are prepared from chips with transparent appearance, e.g. mineral silica minerals such as quartz, silica, crystal, and the like, or glassy silica compound such as glass, molten glass, and the like, may impart good transparency, but may have problems in sedimentation property and sanding process of chips, and thereby could not be prepared by continuous manufacturing method of acrylic artificial marble.

This is because Morse hardness of the matrix of acrylic compound and that of the chips of silica and silica compound representing appearance and pattern are different, and thereby surface flatness may be deteriorated due to the difference in sanding property after preparing the artificial marble in the form of plate.

Accordingly, there is a need for artificial marble that can high refractive index, same or similar specific gravity with matrix, so that the chips are not to be sunken without regard to the manufacturing hours and the artificial marbles have constant pattern without regard to the curing hours, and same abrasion property with matrix, so that the artificial marbles have good surface flatness and smoothness after preparing the artificial marble.

In order to solve the above-mentioned problems, the present applicant have developed the marble chips that can have excellent cohesion ability with matrix, same or similar specific gravity with matrix, same or similar abrasion property with matrix, high specific gravity, refractive index and transparency, and the artificial marbles comprising the same, by curing a resin composition comprising binders containing halogenated alkoxylated diacrylate oligomers and reactive monomers

### Objects of the Invention

An object of the present invention is to provide marble chips that can have a specific gravity of 1.45 to 1.75, and method for preparing the same

Other object of the present invention is to provide marble chips that can represent uniform pattern without regard to the curing hours and manufacturing hours, and method for preparing the same.

Another object of the present invention is to provide marble chips that can have excellent transparency and refractive index, and method for preparing the same.

Another object of the present invention is to provide marble chips that can have same sanding property and Morse hardness with matrix, and method for preparing the same.

Another object of the present invention is to provide marble chips that can have excellent cohesion ability with matrix, and method for preparing the same.

Another object of the present invention is to provide marble chips that can represent three dimensional texture, and method for preparing the same.

Another object of the present invention is to provide marble chips that can have no concave phenomenon due to excellent pigment dispersion property and cohesion ability with matrix, and method for preparing the same.

Another object of the present invention is to provide marble chips that can have excellent chemical resistance, and method for preparing the same.

Another object of the present invention is to provide artificial marbles that can have same appearance and texture with engineered stone by applying the marble chips.

Another object of the present invention is to provide artificial marbles that can be continuously prepared by applying the marble chips.

Another object of the present invention is to provide artificial marbles that can have excellent thermal processability.

Another object of the present invention is to provide artificial marbles that can have excellent smoothness.

The above-mentioned objects and other objects of the present invention could be achieved by the following disclosure and appended claims.

### Summary of the Invention

One aspect of the present invention relates to marble chips. The marble chips may be prepared by curing a resin composition comprising binders and reactive monomers, wherein the binders comprise a halogenated alkoxylated di(meth)acrylate oligomer.

In one embodiment of the present invention, the resin composition may comprise 50 to 90 parts by weight of the binders and 10 to 50 parts by weight of the reactive monomers. In other embodiment of the present invention, the binders may further comprise halogenated urethane acrylate, halogenated epoxy acrylate or a mixture thereof. A number average molecular weight of the halogenated urethane acrylate may be 900 to 4,000. In addition, a number average molecular weight of the halogenated epoxy acrylate may be 600 to 3,500.

The reactive monomers may comprise aromatic vinyl monomer, aromatic divinyl monomer, dimer thereof, alkyl or halogen substituted aromatic vinyl monomer, C₁-C₂₀ alkyl (meth)acrylate, C₆-C₂₀ aryl (meth)acrylate, hydroxyl containing (meth)acrylate, glycidyl (meth)acrylate, C₆-C₂₀ aryl phthalate, C₆-C₂₀ aryl carbonate, and the like. In another embodiment of the present invention, the reactive monomers may be one or more selected from the group consisting of styrene monomer, bromo styrene, vinyl toluene, methyl (meth)acrylate, ethyl (meth)acrylate, 2-ethylhexyl (meth)acrylate, octyl (meth)acrylate, dodecyl (meth)acrylate, octadecyl (meth)acrylate, methylcyclohexyl (meth)acrylate, isobornyl (meth)acrylate, phenyl (meth)acrylate, benzyl (meth)acrylate, chlorophenyl (meth)acrylate, methoxyphenyl (meth)acrylate, bromophenyl (meth)acrylate, ethyleneglycol di(meth)acrylate, 1,2-propyleneglycol (meth)acrylate, 1,3-butanediol di(meth)acrylate, 1,3-propyleneglycol (meth)acrylate, 1,4-butanediol di(meth)acrylate, 1,5-pentanediol di(meth)acrylate, neopentylglycol di(meth)acrylate, diethyleneglycol di(meth)acrylate, triethyleneglycol di(meth)acrylate, dipropyleneglycol di(meth)acrylate, diallyl terephthalate, diallyl phthalate, diallyl carbonate, divinyl benzene, α-methyl styrene, α-methyl styrene dimer, trimethylolpropane tri(meth)acrylate, pentaerythritol tri(meth)acrylate, pentaerythritol tetra(meth)acrylate, dipentaerythritol hexa(meth)acrylate, ethoxyethyl acrylate, epoxy acrylate of glycidyl (meth)acrylic acid, 1,6-hexanediol di(meth)acrylate, glycerin tri(meth)acrylate, methylpropanediol di(meth)acrylate, polyethyleneglycol di(meth)acrylate and mixtures thereof.

The resin composition may further comprise additive selected from the group consisting of coloring agent, defoaming agent, coupling agent, ultraviolet absorbing agent, light diffusing agent, polymerization inhibitor, antistatic agent, flame retardant, heat stabilizer and mixtures thereof.

In another embodiment of the present invention, the resin composition may further comprise second marble chips, and thereby the marble chips may be in the form of chip-in-chip, in which the second marble chips are formed within the marble chips.

In another embodiment of the present invention, the resin composition may further comprise second resin composition having different color or transparency. The second resin composition may comprise second binders and second reactive monomers, and the second binders may be one or more selected from the group consisting of halogenated alkoxylated di(meth)acrylate oligomer, halogenated urethane acrylate and halogenated epoxy acrylate.

In one embodiment of the present invention, the marble chips may have a specific gravity of 1.45 to 1.75. Preferably, the marble chips may have a specific gravity of 1.50 to 1.70.

In one embodiment of the present invention, the marble chips may have a refractive index of 1.55 to 1.75 measured in accordance with ABBE refractometer (3T) at 25 °C.

Other aspect of the present invention relates to a method for preparing the marble chips. The method may comprise a step of mixing binders comprising halogenated alkoxylated di(meth)acrylate oligomer with reactive monomers to prepare a resin composition; a step of curing the resin composition to prepare a cured article ; and a step of pulverizing the cured article.

In one embodiment of the present invention, the cured article may be pulverized so as to have a diameter or a maximum diagonal length of 0.1 to 30 mm. In this case, the cured article may be pulverized after a metal is deposited onto the cured article.

The binders may further comprise halogenated urethane acrylate, halogenated epoxy acrylate or a mixture thereof.

Also, the resin composition may further comprise additive selected from the group consisting of coloring agent, defoaming agent, coupling agent, ultraviolet absorbing agent, light diffusing agent, polymerization inhibitor, antistatic agent, flame retardant, heat stabilizer and mixtures thereof.

In one embodiment of the present invention, the resin composition may further comprise second marble chips, and the marble chips may be prepared in the form of chip-in-chip, in which the second marble chips are formed within the marble chips.

In another embodiment of the present invention, the second marble chips may be one or more selected from the group consisting of the marble chips of the present invention, marble chips of acrylic artificial marble and marble chips of unsaturated ester-based artificial marble.

In another embodiment of the present invention, the resin composition may further comprise second resin composition having different color or transparency, and thereby may form a flow pattern or a multilayer structure. The second resin composition may comprise second binders and second reactive monomers, and the second binders may be one or more selected from the group consisting of halogenated alkoxylated di(meth)acrylate oligomer, halogenated urethane acrylate and halogenated epoxy acrylate. The second resin composition having different color or transparency may be comprised in multiple.

Another aspect of the present invention relates to an artificial marble comprising the marble chips of the present invention. The artificial marble may comprise a matrix and the marble chips dispersed therein. In one embodiment of the present invention, the matrix may have a specific gravity of 1.52 to 1.83, the marble chips may have a specific gravity of 1.45 to 1.75, and a specific gravity difference between the matrix and the marble chips may be 2.0 or less. The matrix may be a cured article of curable composition comprising acrylic syrup and inorganic filler.

Hereinafter, details of the present invention will be described more specifically.

### Brief description of the Drawings

Fig. 1 is a schematic diagram of artificial marble using marble chips in the form of chips-in-chip according to the present invention.
Fig. 2 is a schematic diagram of artificial marble using marble chips with multilayer structure according to the present invention.

### Detailed Description of the Invention

### Marble Chips

The marble chips of the present invention may be prepared by curing a resin composition comprising binders and reactive monomers, wherein the binders comprise a halogenated alkoxylated di(meth)acrylate oligomer.

Examples of the halogenated alkoxylated di(meth)acrylate oligomer may comprise, without limitation, brominated alkoxylated bisphenol A diacrylate, brominated alkoxylated bisphenol A dimethacrylate, chlorinated alkoxylated bisphenol A diacrylate, chlorinated alkoxylated bisphenol A dimethacrylate, and the like. Various kinds of the halogenated alkoxylated di(meth)acrylate configured according to the number of repeating units (-OC₂H₄-) may be used alone or in combination thereof. A number average molecular weight of the halogenated alkoxylated di(meth)acrylate oligomer may be 600 to 4,500.

In another embodiment of the present invention, the binders may further comprise halogenated urethane acrylate, halogenated epoxy acrylate, and a mixture thereof. A number average molecular weight of the halogenated urethane acrylate may be 900 to 4,000. In addition, a number average molecular weight of the halogenated epoxy acrylate may be 600 to 3,500. When the number average molecular weights are less than the above range, the crosslink density per unit volume may be heightened and thereby the resin composition may be brittle. When the number average molecular weights are more than the above range, the crosslink density may be declined and thereby the resin composition may be soft, and further the viscosity of the resin composition may be heightened over and thereby it may be difficult to treat the resin composition.

When the halogenated urethane acrylate or the halogenated epoxy acrylate are used together with the halogenated alkoxylated di(meth)acrylate oligomer, in one embodiment of the present invention, the binders may comprise 2 to 98 % by weight of the halogenated alkoxylated di(meth)acrylate oligomer and 2 to 98 % by weight of the halogenated urethane acrylate. In other embodiment of the present invention the binders may comprise 2 to 98 % by weight of the halogenated alkoxylated di(meth)acrylate oligomer and 2 to 98 % by weight of the halogenated epoxy acrylate. In another embodiment of the present invention, the binders the binders may comprise 1 to 98 % by weight of the halogenated alkoxylated di(meth)acrylate oligomer, 1 to 98 % by weight of the halogenated urethane acrylate and 1 to 98 % by weight of the halogenated epoxy acrylate.

In one embodiment of the present invention, the binders may be comprised in an amount of 50 to 90 parts by weight, preferably 60 to 90 parts by weight, more preferably 70 to 90 parts by weight. In one embodiment of the present invention, the reactive monomers may be comprised in an amount of 10 to 50 parts by weight, preferably 10 to 40 parts by weight, more preferably 10 to 30 parts by weight. When an amount of the binders is less than 50 parts by weight, the effect of high specific gravity may be deteriorated, and when an amount of the binders is more than 90 parts by weight, the viscosity of the resin composition may be heightened over and thereby the workability may be deteriorated.

The reactive monomers may comprise aromatic vinyl monomer, aromatic divinyl monomer, dimer thereof, alkyl or halogen substituted aromatic vinyl monomer, C₁-C₂₀ alkyl (meth)acrylate, C₆-C₂₀ aryl (meth)acrylate, hydroxyl containing (meth)acrylate, glycidyl (meth)acrylate, C₆-C₂₀ aryl phthalate, C₆-C₂₀ aryl carbonate, and the like. In another embodiment of the present invention, the reactive monomers may be one or more selected from the group consisting of styrene monomer, bromo styrene, vinyl toluene, methyl (meth)acrylate, ethyl (meth)acrylate, 2-ethylhexyl (meth)acrylate, octyl (meth)acrylate, dodecyl (meth)acrylate, octadecyl (meth)acrylate, methylcyclohexyl (meth)acrylate, isobornyl (meth)acrylate, phenyl (meth)acrylate, benzyl (meth)acrylate, chlorophenyl (meth)acrylate, methoxyphenyl (meth)acrylate, bromophenyl (meth)acrylate, ethyleneglycol di(meth)acrylate, 1,2-propyleneglycol (meth)acrylate, 1,3-butanediol di(meth)acrylate, 1,3-propyleneglycol (meth)acrylate, 1,4-butanediol di(meth)acrylate, 1,5-pentanediol di(meth)acrylate, neopentylglycol di(meth)acrylate, diethyleneglycol di(meth)acrylate, triethyleneglycol di(meth)acrylate, dipropyleneglycol di(meth)acrylate, diallyl terephthalate, diallyl phthalate, diallyl carbonate, divinyl benzene, α-methyl styrene, α-methyl styrene dimer, trimethylolpropane tri(meth)acrylate, pentaerythritol tri(meth)acrylate, pentaerythritol tetra(meth)acrylate, dipentaerythritol hexa(meth)acrylate, ethoxyethyl acrylate, epoxy acrylate of glycidyl (meth)acrylic acid, 1,6-hexanediol di(meth)acrylate, glycerin tri(meth)acrylate, methylpropanediol di(meth)acrylate, polyethyleneglycol di(meth)acrylate and mixtures thereof.

The marble chips of the present invention may further comprise additive such as coloring agent, defoaming agent, coupling agent, ultraviolet absorbing agent, light diffusing agent, polymerization inhibitor, antistatic agent, flame retardant, heat stabilizer, and the like. The additive may be used alone or in combination thereof.

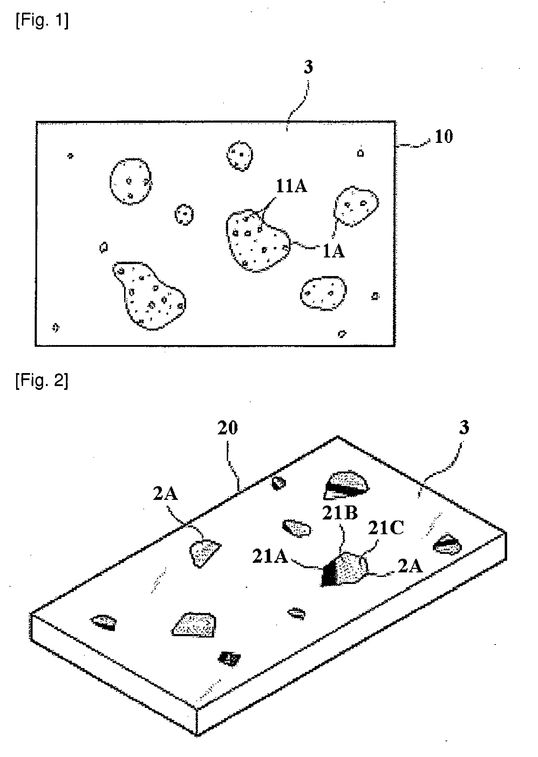

In another embodiment of the present invention, the marble chips may be in the form of chip-in-chip, in which the second marble chips are formed within the marble chips. Fig. 1 is a schematic diagram of artificial marble using the marble chips in the form of chip-in-chip according to the present invention. As shown in Fig. 1, the marble chips have a structure, in which smaller marble chips (11A) are embedded in the marble chips (1A).

In another embodiment of the present invention, a flow pattern or a multilayer structure may be formed in the marble chips. Fig. 2 is a schematic diagram of artificial marble using marble chips in the form of multilayer structure according to the present invention. As shown in Fig. 2, a plural of layers having different color or transparency (21A, 21B, 21C) may be formed in the marble chips in the form of multilayer structure (2A).

In one embodiment of the present invention, the marble chips may have a specific gravity of 1.45 to 1.75. Preferably, the marble chips may have a specific gravity of 1.50 to 1.70. In other embodiment of the present invention, the marble chips may have a specific gravity of 1.51 to 1.67. In one embodiment of the present invention, the marble chips may have a refractive index of 1.55 to 1.75 measured in accordance with ABBE refractometer (3T) at 25 °C.

### Method for Preparing the Marble Chips

Other aspect of the present invention relates to a method for preparing the marble chips. The method may comprise a step of mixing binders comprising halogenated alkoxylated di(meth)acrylate oligomer with reactive monomers to prepare a resin composition; a step of curing the resin composition to prepare a cured article ; and a step of pulverizing the cured article.

The resin composition comprises binders and reactive monomers, and optionally may comprise additive such as coloring agent, defoaming agent, coupling agent, ultraviolet absorbing agent, light diffusing agent, polymerization inhibitor, antistatic agent, flame retardant, heat stabilizer, and the like. The coloring agent may comprise inorganic or organic pigment, dye, and the like, and may be comprised in amount of 0.0001 to 10.0 parts by weight, on the basis of 100 parts by weight of the resin composition. In one embodiment of the present invention, the coloring agent may be comprised in amount of 1.0 to 5.0 parts by weight, on the basis of 100 parts by weight of the resin composition. In other embodiment of the present invention, the coloring agent may be comprised in amount of 0.001 to 0.05 parts by weight, on the basis of 100 parts by weight of the resin composition. In another embodiment of the present invention, the coloring agent may be comprised in amount of 0.05 to 2.5 parts by weight, on the basis of 100 parts by weight of the resin composition.

In one embodiment of the present invention, the resin composition may comprise a curing agent when curing. Examples of the curing agent may comprise benzoyl peroxide, dicumyl peroxide, butylhydro peroxide, cumylhydro peroxide, tert-butyl peroxy maleic acid, tert-butyl hydro peroxide, acetyl peroxide, lauroyl peroxide, azobisisobutylonitrile, 2,2'-azobis(2,4-dimethylvaleronitrile), and mixtures thereof. Also, examples of the curing agent may comprise a mixture of peroxide and amine or sulfonic acid compound, a mixture of peroxide and saponification salt of copper, cobalt, potassium, calcium, zirconium, or zinc, and the like. In one embodiment of the present invention, the curing agent may be comprised in an amount of 0.03 to 2.5 parts by weight, preferably 0.05 to 2.0 parts by weight, on the basis of 100 parts by weight of the resin composition. There is no specific limit on curing method, and in one embodiment of the present invention, the resin composition may be cured at 50 to 180 °C. In order to adjust the degree of curing, amine or sulfonic acid compound may be used in combination with the curing agent, or saponification salt of copper, cobalt, potassium, calcium, zirconium, or zinc may be in combination with the curing agent.

In one embodiment of the present invention, the cured article may be pulverized so as to have an average diameter of 0.1 to 30 mm, preferably 0.1 to 20 mm. A method for pulverizing may be easily carried out by a person with ordinary skill in the art.

In other embodiment of the present invention, the cured article may be pulverized after a metal such as aluminium or silver is deposited onto the cured article. When marble chips pulverized after a metal is deposited are added into an artificial marble, the artificial marble can represent three-dimensional and jewelry appearance well.

In another embodiment of the present invention, the resin composition may further comprise second marble chips. The second marble chips may be transparent, translucent, opaque, or combinations thereof. In one embodiment of the present invention, the second marble chips may be the marble chips of the present invention, marble chips made of pulverized acrylic artificial marble, or marble chips made of pulverized unsaturated ester-based artificial marble. When the resin composition is cured and pulverized after the second marble chips are added, the marble chips may be in the form of chip-in-chip and may represent more various patterns.

In another embodiment of the present invention, the resin composition may further comprise second resin composition having different color or transparency. The second resin composition may comprise second binders and second reactive monomers, and the second binders may be one or more selected from the group consisting of halogenated alkoxylated di(meth)acrylate oligomer, halogenated urethane acrylate and halogenated epoxy acrylate. The second resin composition having different color or transparency may be comprised in multiple. Also, the second resin composition may be transparent or opaque. When more than two kinds of the resin compositions having different color or transparency are used, it is possible to impart a flow pattern or a multilayer structure into marble chips with high specific gravity. In another embodiment of the present invention, when more than two kinds of the resin compositions having different color are prepared and the more than two kinds of the resin compositions having different color are poured onto a conveyor belt for curing, a cured article having flow pattern is formed and marble chips having flow pattern are prepared by pulverizing the cured article.

### Artificial Marble

Another aspect of the present invention relates to an artificial marble comprising the marble chips of the present invention. The artificial marble may be prepared by curing a curable composition comprising the marble chips and resin syrup according to the conventional method. The resin syrup may comprise an acrylic resin or an unsaturated polyester-based resin, preferably the acrylic resin. The curable composition may further comprise inorganic filler such as calcium carbonate, aluminum hydroxide, silica, alumina, barium sulfate, magnesium hydroxide, and the like, or conventional additives. Input ratio and input method of the inorganic filler or the conventional additives can be easily carried out by a person with ordinary skill in the art.

In one embodiment of the present invention, the artificial marble may comprise the marble chips with a specific gravity of 1.45 to 1.75, and thereby can represent uniform patterns without curing hours or manufacturing hours and can be prepared continuously.

In one embodiment of the present invention, the matrix may have a specific gravity of 1.52 to 1.83, the marble chips may have a specific gravity of 1.45 to 1.75, and a specific gravity difference between the matrix and the marble chips may be 2.0 or less, preferably 1.7 or less, more preferably 1.5 or less, most preferably 1.0 or less.

In the artificial marble of the present invention, there is less specific gravity difference between the matrix and the marble chips, and thereby the marble chips may be uniformly dispersed in the matrix.

In embodiments of the present invention, the matrix may be a cured article of curable composition comprising acrylic syrup and the inorganic filler.

In one embodiment of the present invention, the artificial marble may comprise marble chips in the form of chip-in-chip, and thereby may have a structure, in which the marble chips in the form chip-in-chip are dispersed in the matrix. Fig. 1 is a schematic diagram of artificial marble (10) using marble chips in the form of chips-in-chip (1A). Smaller marble chips (11A) are irregularly dispersed within the marble chips (1A) of the present invention, and the marble chips in the form of chip-in-chip (1A) are dispersed in the matrix (3).

In another embodiment of the present invention, the artificial marble may have a structure, in which marble chips with a multilayer structure are dispersed within the matrix, by using marble chips with a multilayer structure. Fig. 2 is a schematic diagram of artificial marble (20) using marble chips in the form of multilayer structure (2A). As shown in Fig. 2, a plural of layers having different color or transparency (21A, 21B, 21C) are formed in the marble chips with the form of multilayer structure (2A), and the marble chips are dispersed within the matrix (3).

The artificial marble using the marble chips can express a similar surface texture with engineered stone and can have excellent processability, and thereby can be applied to various fields comprising counter tops and decorative products such as kitchen sink tops, washstand or vanity tops, front desk of bank or general store, and the like.

In addition, the artificial marble may be used as marble chips in the form of chip-in-chip, in which transparent marble chips are formed, by pulverizing the artificial marble.

The invention may be better understood by reference to the following examples which are intended for the purpose of illustration and are not to be construed as in any way limiting the scope of the present invention, which is defined in the claims appended hereto.

### Examples

### Examples 1-3: Preparing marble chips

### Example 1

100 parts by weight of resin composition comprising 80 parts by weight of bromide alkoxylated diacrylate and 20 parts by weight of methyl methacrylate is mixed with 0.2 parts by weight of benzoyl peroxide and 0.5 parts by weight of bis(4-tert-butylcyclohexyl)peroxy dicarbonate, the mixture is cured at 50 °C and pulverized to prepare high specific gravity marble chip with a specific gravity of 1.608.

### Example 2

Example 2 is prepared in the same manner as in Example 1 except that 0.01 parts by weight of phthalocyanine green is further added as coloring agent. The prepared marble chip has a specific gravity of 1.609.

### Example 3

100 parts by weight of resin composition comprising 90 parts by weight of bromide alkoxylated diacrylate and 10 parts by weight of styrene monomer is mixed with 0.2 parts by weight of benzoyl peroxide and 0.5 parts by weight of bis(4-tert-butylcyclohexyl)peroxy dicarbonate, the mixture is cured at 50 °C and pulverized to prepare high specific gravity marble chip with a specific gravity of 1.691.

### Comparative Example 1

100 parts by weight of solution prepared by dissolving polymethyl methacrylate in methyl methacrylate is mixed with 2 parts by weight of trimethylpropane triacrylate, 0.1 part by weight of n-dodecyl mercaptan, and 1.0 part by weight of benzoyl peroxide, the mixture is cured at 50 °C and pulverized to prepare PMMA marble chips with a specific gravity of 1.183.

### Comparative Example 2

Comparative Example 2 is prepared in the same manner as in Example 1 except that 100 parts by weight of unsaturated polyester resin (Aekyung Chemical, product name: TP-145X) and 1.0 part by weight of benzoyl peroxide are used. The prepared marble chip has a specific gravity of 1.203.

### Comparative Example 3

Comparative Example 3 is prepared in the same manner as in Example 1 except that 100 parts by weight of vinyl ester resin (Aekyung Chemical, product name: DION-9120) prepared by polymerizing 60 parts by weight of epoxy acrylate oligomer and 40 parts by weight of styrene monomer, and 1.0 part by weight of benzoyl peroxide are used. The prepared marble chip has a specific gravity of 1.194.

### Examples 4-6: Preparing artificial marble

### Example 4

100 parts by weight of syrup prepared by dissolving polymethyl methacrylate in methyl methacrylate is mixed with 180 parts by weight of aluminum hydroxide, 2 parts by weight of trimethylpropane triacrylate, 0.1 part by weight of n-dodecyl mercaptan, 0.1 part by weight of defoaming agent, 0.1 part by weight of dispersant, and 1.0 part by weight of benzoyl peroxide. To the mixture, 50 parts by weight of the marble chips prepared in example 1 are added. The resulting mixture is stirred well and then cured at 60 °C according to continuous manufacturing method to prepare artificial marble.

### Example 5

Example 5 is prepared in the same manner as in Example 4 except that the colored transparent marble chips prepared in Example 2 are used.

### Example 6

Example 6 is prepared in the same manner as in Example 4 except that the marble chips prepared in Example 3 are used.

### Comparative Example 4

Comparative Example 4 is prepared in the same manner as in Example 4 except that the marble chips prepared in Comparative Example 1 are used.

### Comparative Example 5

Comparative Example 5 is prepared in the same manner as in Example 4 except that the marble chips prepared in Comparative Example 2 are used.

### Comparative Example 6

Comparative Example 6 is prepared in the same manner as in Example 4 except that the marble chips prepared in Comparative Example 3 are used.

The properties of the artificial marbles of examples 4-6 prepared by using the marble chips prepared in examples 1-3 and the artificial marbles of comparative examples 4-6 prepared by using the marble chips prepared in comparative examples 1-3 are shown in the following Table 1.

**Table 1**

| | | **Marble chips** | | | **Smoothness** | **Sanding Property** | **Concave** | **Chips Distribution of Shear Plane** | **Heat Processability** |
|---|---|---|---|---|---|---|---|---|---|
| | | **Chemical Resistance Test** | **Specific Gravity** | **Refractive Index** | | | | | |
| **Examples** | **4** | Good | 1.608 | 1.593 | Good | Good | No | Good | 150R Good |
| | **5** | Good | 1.609 | 1.592 | Good | Good | No | Good | 150R Good |
| | **6** | Good | 1.691 | 1.607 | Good | Good | No | Good | 150R Good |
| **Comparative Examples** | **4** | Good | 1.183 | 1.490 | Good | Good | No | Poor | 100R Good |
| | **5** | Poor | 1.203 | 1.531 | Good | Good | Occur | Poor | 300R Good |
| | **6** | Good | 1.194 | 1.542 | Good | Good | No | Poor | 250R Good |

The properties of the artificial marbles as shown in Table 1 are measured in accordance with the following method.
(1) Chemical Resistance: the marble chip is deposited into a mixture of hydrochloric acid with concentration of 1.0 N and ammonia with concentration of 1.0 N at 25 °C for 48 hours, and then the surface of the marble chip is evaluated the naked eye.
(2) Refractive Index: the refractive index of the marble chip is measured in accordance with ABBE refractometer (3T) at 25 °C.
(3) Smoothness: after sanding process, the smoothness of the interface between the marble chip and the matrix is evaluated by the naked eye.
(4) Sanding Property: after sanding the artificial marble by the sand paper, the appearance of the marble chip is evaluated by the naked eye.
(5) Concave: the concave refers to a phenomenon such as cracking phenomenon of interface between the marble chip and the matrix, or depression phenomenon of the marble chips, and is evaluated by the naked eye.
(6) Heat Processability: the artificial marble is heated at 180 °C for 20 minutes, curved surface machining for the artificial marble is carried out, and the minimum radius that does not cause a overhang phenomenon of the marble chips or a cracking phenomenon is measured.

As shown in Table 1, examples 4-6 are good in the evaluations of all properties, and also in heat processability, they are good up to curved surface with a radius of 150 mm. Comparative example 4 has the best result in heat processability, but is not good in the evaluation of chips distribution at shear plane. Further, the comparative example 4 does not express the texture such as quartz or engineered stone due to the low refractive index. Comparative example 5 is poor in the evaluation of chips distribution at shear plane, is worst in the evaluations of concave and heat processability, and is poor in the evaluation of chemical resistance. Comparative example 6 is poor in the evaluation of chips distribution at shear plane, and thereby it is expected that the continuous manufacturing method for artificial marble is not possibly applied to.

Many modifications and changes of the present invention may be easily carried out by a person with ordinary skill in the art and may be deemed to be with the scope of the present invention as defined in the following claims.

## Claims

1. Marble chips prepared by curing a resin composition comprising binders and reactive monomers, wherein the binders comprise a halogenated alkoxylated di(meth)acrylate oligomer.

2. The marble chips of Claim 1, wherein the resin composition comprises 50 to 90 parts by weight of the binders and 10 to 50 parts by weight of the reactive monomers.

3. The marble chips of Claim 1 or 2, wherein the binders further comprise halogenated urethane acrylate, halogenated epoxy acrylate or a mixture thereof.

4. The marble chips any of the Claims 1 to 3, wherein a number average molecular weight of the halogenated urethane acrylate is 900 to 4,000, and a number average molecular weight of the halogenated epoxy acrylate is 600 to 3,500.

5. The marble chips any of the Claims 1 to 4, wherein the reactive monomers are selected from the group consisting of styrene monomer, bromo styrene, vinyl toluene, methyl (meth)acrylate, ethyl (meth)acrylate, 2-ethylhexyl (meth)acrylate, octyl (meth)acrylate, dodecyl (meth)acrylate, octadecyl (meth)acrylate, methylcyclohexyl (meth)acrylate, isobornyl (meth)acrylate, phenyl (meth)acrylate, benzyl (meth)acrylate, chlorophenyl (meth)acrylate, methoxyphenyl (meth)acrylate, bromophenyl (meth)acrylate, ethyleneglycol di(meth)acrylate, 1,2-propyleneglycol (meth)acrylate, 1,3-butanediol di(meth)acrylate, 1,3-propyleneglycol (meth)acrylate, 1,4-butanediol di(meth)acrylate, 1,5-pentanediol di(meth)acrylate, neopentylglycol di(meth)acrylate, diethyleneglycol di(meth)acrylate, triethyleneglycol di(meth)acrylate, dipropyleneglycol di(meth)acrylate, diallyl terephthalate, diallyl phthalate, diallyl carbonate, divinyl benzene, α-methyl styrene, α-methyl styrene dimer, trimethylolpropane tri(meth)acrylate, pentaerythritol tri(meth)acrylate, pentaerythritol tetra(meth)acrylate, dipentaerythritol hexa(meth)acrylate, ethoxyethyl acrylate, epoxy acrylate of glycidyl (meth)acrylic acid, 1,6-hexanediol di(meth)acrylate, glycerin tri(meth)acrylate, methylpropanediol di(meth)acrylate, polyethyleneglycol di(meth)acrylate and mixtures thereof.

6. The marble chips of any of the Claims 1to 5, further comprising additive selected from the group consisting of coloring agent, defoaming agent, coupling agent, ultraviolet absorbing agent, light diffusing agent, polymerization inhibitor, antistatic agent, flame retardant, heat stabilizer and mixtures thereof.

7. The marble chips of any of the Claims 1 to 6, wherein the resin composition further comprises second marble chips, and the marble chips are in the form of chip-in-chip, in which the second marble chips are formed within the marble chips.

8. The marble chips of any of the Claims 1 to 7, wherein the resin composition further comprises second resin composition having different color or transparency, the second resin composition comprises second binders and second reactive monomers, and the second binders are one or more selected from the group consisting of halogenated alkoxylated di(meth)acrylate oligomer, halogenated urethane acrylate and halogenated epoxy acrylate.

9. The marble chips of any of the Claims 1 to 8, wherein the marble chips have a specific gravity of 1.45 to 1.75.

10. The marble chips of any of the Claims 1 to 9, wherein the marble chips have a refractive index of 1.55 to 1.75 measured in accordance with ABBE refractometer (3T) at 25 °C.

11. A method for preparing marble chips comprising:
a step of mixing binders comprising halogenated alkoxylated di(meth)acrylate oligomer with reactive monomers to prepare a resin composition;
a step of curing the resin composition to prepare a cured article ; and
a step of pulverizing the cured article.

12. The method for preparing marble chips of Claim 11, wherein the cured article is pulverized so as to have a diameter or a maximum diagonal length of 0.1 to 30 mm.

13. The method for preparing marble chips of Claim 11 or 12, wherein the cured article is pulverized after a metal is deposited onto the cured article.

14. The method for preparing marble chips of any of the Claims 11 to 13, wherein the binders further comprise halogenated urethane acrylate, halogenated epoxy acrylate or a mixture thereof.

15. An artificial marble comprising the marble chips of anyone of Claims 1 to 10.

16. The artificial marble of Claim 15, wherein the artificial marble comprises a matrix and the marble chips dispersed therein.

17. The artificial marble of Claim 15 or 16, wherein the matrix has a specific gravity of 1.52 to 1.83, the marble chips have a specific gravity of 1.45 to 1.75, and a specific gravity difference between the matrix and the marble chips is 2.0 or less.

## Patentansprüche

1. Marmor-Späne hergestellt durch Aushärten einer Harz-Zusammensetzung umfassend Bindemittel und reaktive Monomere, wobei das Bindemittel ein halogeniertes, alkoxyliertes di(meth)acrylat Oligomer umfasst.

2. Die Marmor-Späne nach Anspruch 1, wobei die Harz-Zusammensetzung 50 bis 90 Gewichtsteile des Bindemittels und 10 bis 50 Gewichtsteile des reaktiven Monomers umfasst.

3. Die Marmor-Späne nach Anspruch 1 oder 2, wobei das Bindemittel desweiteren halogenierte Urethan-Acrylate, halogenierte Epoxy-Acrylate oder eine Mischung derselben umfasst.

4. Die Marmor-Späne nach einem der Ansprüche 1 bis 3, wobei ein Anzahl gemitteltes Molekulargewicht des halogenierten Urethan-Acrylats 900 bis 4000 beträgt, und ein Anzahl gemitteltes Molekulargewicht des halogenierten Epoxy-Acrylats 600 bis 3500 beträgt.

5. Die Marmor-Späne nach einem der Ansprüche 1 bis 4, wobei die reaktiven Monomere ausgesucht sind aus der Gruppe bestehend aus Styren-Monomer, Brom-Styren, Vinyl-Toluol, Methyl(meth)acrylat, Ethyl(meth)acrylat, 2-Ethylhexyl(meth)acrylat, Octyl(meth)acrylat, Dodecyl(meth)acrylat, Octadecyl(meth)acrylat, Methylcyclohexyl(meth)acrylat, Isobornyl(meth)acrylat, Phenyl(meth)acrylat, Benzyl(meth)acrylat, Chlorophenyl(meth)acrylat, Methoxyphenyl(meth)acrylat, Bromophenyl(meth)acrylat, Ethylenglykol-di(meth)acrylat, 1,2-Propylenglykol(meth)acrylat, 1,3 Butandiol-di(meth)acrylat, 1,3 Propylenglykol(meth)acrylat, 1,4 Butandiol-di(meth)acrylat, 1,5 Pentandiol-di(meth)acrylat, Neopentylglykol-di(meth)acrylat, Diethylenglykol-di(meth)acrylat, Triethylenglykol-di(meth)acrylat, Dipropylenglykol-di(meth)acrylat, Diallylterephthalate, Diallylphthalate, Diallyl-Carbonat, Divinylbenzol, α-Methylstyren, α-Methylstyren-Dimer, Trimethylolpropan-tri(meth)acrylat, Pentaerythritol-tri(meth)acrylat, Pentaerythritol-tetra(meth)acrylat, Dipentaerythritol-hexa(meth)acrylat, Ethoxyethylacrylat, epoxidiertes Acrylat der Glycidyl(meth)acrylsäure, 1,6 Hexandiol-di(meth)acrylat, Glycerin-tri(meth)acrylat, Methylpropandiol-di(meth)acrylat, Polyethylenglykol-di(meth)acrylat und Mischungen derselben.

6. Die Marmor-Späne nach einem der Ansprüche 1 bis 5, weiterhin umfassend Additive ausgewählt aus der Gruppe bestehend aus Farbstoffen, Entschäumer, Kuppler, UV-absorbierende Mittel, lichtstreuende Mittel, Polymerisationsinhibitoren, Antistatik-Mittel, Flammschutzmittel, hitzestabilisierende Mittel und Mischungen daraus.

7. Die Marmor-Späne nach einem der Ansprüche 1 bis 6, wobei die Harz-Zusammensetzung desweiteren zweite Marmor-Späne umfasst, und die Marmor-Späne liegen in einer Ausgestaltung Span-in-Span vor, in welcher die zweiten Marmor-Späne innerhalb der ersten Marmor-Späne hergestellt werden.

8. Die Marmor-Späne nach einem der Ansprüche 1 bis 7, wobei die Harz-Zusammensetzung desweiteren eine zweite Harz-Zusammensetzung mit einer unterschiedlichen Farbe oder Transparenz umfasst, wobei die zweite Harz-Zusammensetzung zweite Bindemittel und zweite reaktive Monomere umfasst, und die zweiten Bindemittel sind ein oder mehrere ausgesucht aus der Gruppe bestehend aus halogenierten alkoxylierten Di(meth)Acrylat Oligomeren, halogenierten Urethan-Acrylaten und halogenierten Epoxy-Acrylaten.

9. Die Marmor-Späne nach einem der Ansprüche 1 bis 8, wobei die Marmor-Späne eine spezifische Dichte von 1,45 bis 1,75 aufweisen.

10. Die Marmor-Späne nach einem der Ansprüche 1 bis 9, wobei die Marmor-Späne einen Refraktionsindex gemessen mit einem Abbe-Refraktometer (3T) bei 25°C von 1,55 bis 1,75 aufweisen.

11. Ein Verfahren zur Herstellung von Marmor-Spänen umfassend:
einen Schritt zur Mischung der Bindemittel umfassend halogenierte alkoxylierte di(meth)acrylat Oligomere mit reaktiven Monomeren zur Herstellung einer Harzzusammensetzung;
einen Schritt zur Härtung der Harzzusammensetzung um einen gehärteten Artikel zu erzeugen; und
einen Schritt zur Pulverisierung der gehärteten Artikel.

12. Das Verfahren zur Herstellung der Marmor-Späne nach Anspruch 11, wobei die gehärteten Artikel derart pulverisiert werden, dass sie einen Durchmesser oder eine maximale diagonale Länge von 0,1- 30 mm aufweisen.

13. Das Verfahren zur Herstellung von Marmor-Spänen nach Anspruch 11 oder 12, wobei die gehärteten Artikel pulverisiert werden nachdem einen Metall auf der Oberfläche der gehärteten Artikel abgeschieden wurde.

14. Das Verfahren zur Herstellung von Marmor-Spänen nach einem der Ansprüche 11 - 13, wobei die Bindemittel desweiteren halogenierte Urethan-Acrylate, halogenierte Epoxy-Acrylate oder Mischungen davon aufweisen.

15. Ein künstlicher Marmor, aufweisend die Marmor-Späne nach einem der Ansprüche 1 - 10.

16. Der künstliche Marmor nach Anspruch 15, wobei der künstliche Marmor eine Matrix und darin dispergierte Marmor-Späne aufweist.

17. Der künstliche Marmor nach Anspruch 15 oder 16, wobei die Matrix eine spezifische Dichte von 1,52 - 1,83, die Marmor-Späne eine spezifische Dichte von 1,45 - 1,75 aufweisen, und der Unterschied in der spezifischen Dichte zwischen der Matrix und dem Marmor-Spänen 2,0 oder weniger beträgt.

## Revendications

1. Ecailles de marbre préparées par durcissement d'une composition de résine comprenant des liants et des monomères réactifs, lesquels liants comprennent un oligomère de di(méth)acrylate alcoxylé halogéné.

2. Ecailles de marbre conformes à la revendication 1, pour lesquelles la composition de résine comprend de 50 à 90 parties en poids de liants et de 10 à 50 parties en poids de monomères réactifs.

3. Ecailles de marbre conformes à la revendication 1 ou 2, pour lesquelles les liants comprennent en outre une résine uréthane-acrylate halogénée, une résine époxy-acrylate halogénée, ou un mélange de telles résines.

4. Ecailles de marbre conformes à l'une des revendications 1 à 3, pour lesquelles la masse molaire moyenne en nombre de la résine uréthane-acrylate halogénée vaut de 900 à 4000, et la masse molaire moyenne en nombre de la résine époxy-acrylate halogénée vaut de 600 à 3500.

5. Ecailles de marbre conformes à l'une des revendications 1 à 4, pour lesquelles les monomères réactifs sont choisis dans l'ensemble constitué par les suivants : styrène, bromo-styrène, vinyl-toluène, (méth)acrylate de méthyle, (méth)acrylate d'éthyle, (méth)acrylate de 2-éthyl-hexyle, (méth)acrylate d'octyle, (méth)acrylate de dodécyle, (méth)acrylate d'octadécyle, (méth)acrylate de méthyl-cyclohexyle, (méth)acrylate d'isobornyle, (méth)acrylate de phényle, (méth)acrylate de benzyle, (méth)acrylate de chloro-phényle, (méth)acrylate de méthoxy-phényle, (méth)acrylate de bromo-phényle, di(méth)acrylate d'éthylèneglycol, (méth)acrylate de 1,2-propylèneglycol, di(méth)-acrylate de 1,3-butanediol, (méth)acrylate de 1,3-propylèneglycol, di-(méth)acrylate de 1,4-butanediol, di(méth)acrylate de 1,5-pentanediol, di(méth)acrylate de néopentyl-glycol, di(méth)acrylate de diéthylène-glycol, di(méth)acrylate de triéthylèneglycol, di(méth)acrylate de di-propylèneglycol, téréphtalate de diallyle, phtalate de diallyle, carbonate de diallyle, divinyl-benzène, α-méthyl-styrène, dimère d'α-méthyl-styrène, tri(méth)acrylate de triméthylolpropane, tri(méth)acrylate de pentaérythritol, tétra(méth)acrylate de pentaérythritol, hexa-(méth)acrylate de di-pentaérythritol, acrylate d'éthoxy-éthyle, époxy-acrylate de glycidyle, acide acrylique, acide méthacrylique, di(méth)-acrylate de 1,6-hexanediol, tri(méth)acrylate de glycérol, di(méth)-acrylate de méthyl-propanediol, et di(méth)acrylate de polyéthylène-glycol, ainsi que leurs mélanges.

6. Ecailles de marbre conformes à l'une des revendications 1 à 5, comprenant en outre un adjuvant choisi dans l'ensemble formé par un colorant, un agent de démoussage, un agent de couplage, un agent absorbant le rayonnement ultraviolet, un agent photo-diffusant, un inhibiteur de polymérisation, un agent antistatique, un agent ignifugeant, et un agent thermo-stabilisant, ainsi que les mélanges de tels agents.

7. Ecailles de marbre conformes à l'une des revendications 1 à 6, pour lesquelles la composition de résine comprend en outre des écailles de marbre d'une deuxième sorte, lesdites écailles de marbre étant alors du type écailles-dans-écailles, les écailles de marbre de deuxième sorte étant noyées au sein desdites écailles de marbre.

8. Ecailles de marbre conformes à l'une des revendications 1 à 7, pour lesquelles la composition de résine comprend en outre une deuxième composition de résine qui présente une couleur différente ou un degré de transparence différent, laquelle deuxième composition de résine comprend des deuxièmes liants et des deuxièmes monomères réactifs, lesquels deuxièmes liants sont un ou plusieurs liant(s) choisi(s) dans l'ensemble constitué par un oligomère de di(méth)acrylate alcoxylé halogéné, une résine uréthane-acrylate halogénée et une résine époxy-acrylate halogénée.

9. Ecailles de marbre conformes à l'une des revendications 1 à 8, lesquelles écailles de marbre présentent une densité valant de 1,45 à 1,75.

10. Ecailles de marbre conformes à l'une des revendications 1 à 9, lesquelles écailles de marbre présentent un indice de réfraction, mesuré au moyen d'un réfractomètre d'Abbe (modèle 3T) à 25 °C, valant de 1,55 à 1,75.

11. Procédé de préparation d'écailles de marbre, comprenant les étapes suivantes :
- mélanger des liants comprenant un oligomère de di(méth)acrylate alcoxylé halogéné avec des monomères réactifs, afin de préparer une composition de résine,
- faire durcir la composition de résine, pour en faire un article durci,
- et concasser l'article durci.

12. Procédé de préparation d'écailles de marbre, conforme à la revendication 11, dans lequel l'article durci est concassé en fragments présentant un diamètre ou une longueur de plus grande diagonale valant de 0,1 à 30 mm.

13. Procédé de préparation d'écailles de marbre, conforme à la revendication 11 ou 12, dans lequel on concasse l'article durci après avoir déposé un métal sur l'article durci.

14. Procédé de préparation d'écailles de marbre, conforme à l'une des revendications 11 à 13, dans lequel les liants comprennent en outre une résine uréthane-acrylate halogénée, une résine époxy-acrylate halogénée, ou un mélange de telles résines.

15. Marbre artificiel comprenant des écailles de marbre conformes à l'une des revendications 1 à 10.

16. Marbre artificiel conforme à la revendication 15, lequel marbre artificiel comprend une matrice dans laquelle sont dispersées les écailles de marbre.

17. Marbre artificiel conforme à la revendication 15 ou 16, dans lequel la matrice présente une densité valant de 1,52 à 1,83, les écailles de marbre présentent une densité valant de 1,45 à 1,75, et la différence de densité entre la matrice et les écailles de marbre est inférieure ou égale à 2,0.
